# DEMANDE DE BREVET EUROPEEN

(11) **EP 3 181 383 A2**
(43) Date de publication de la demande: **21.06.2017**
(21) Numéro de dépôt: 16204178.4
(22) Date de dépôt: 14.12.2016
(51) Int. Cl.: B60D 1/06, B60D 1/58

(54) **DISPOSITIF D'ATTELAGE POUR VÉHICULE, LEDIT DISPOSITIF ÉTANT MUNI DE MOYENS DE VERROUILLAGE DE SÉCURITÉ**

(30) Priorité: 18.12.2015 FR 1562834
(71) Demandeur: Ur'ben, 12800 Naucelle (FR)
(72) Inventeur: AUREJAC, Mathieu, 12800 NAUCELLE (FR); CAVALLARI, Philippe, 81000 ALBI (FR); GAFFARD, Benjamin, 12000 RODEZ (FR)
(74) Mandataire: Cabinet Plasseraud

(57) **Abrégé**

Ce dispositif d'attelage présente un crochet (20) solidaire d'un corps (2) d'attelage et un levier (4) pivotant autour d'un axe de pivotement (12) entre une position rabattue interdisant à un anneau de s'engager sur le crochet (20) et une position relevée autorisant un tel engagement.

Le levier (4) et le corps (2) sont munis de moyens de guidage (14, 42) conformés de telle sorte que, dans sa position rabattue, le levier (4) est mobile en translation selon une direction sensiblement perpendiculaire à l'axe de pivotement (12), entre une position dans laquelle un pivotement vers la position relevée est possible et une autre position dans laquelle un tel pivotement est empêché par une butée (28), et des moyens de rappel (8) sont prévus pour précontraindre le levier (4) dans sa position translatée rabattue dans laquelle un pivotement vers la position relevée est empêchée.

## Description

La présente invention concerne un dispositif d'attelage pour véhicule, ledit dispositif étant muni de moyens de verrouillage de sécurité.

Le domaine de la présente invention est plus particulièrement le domaine des attelages destinés à recevoir une remorque (ou autre) muni d'un timon torique. Ce type d'attelage se retrouve le plus souvent sur des camions ou camionnettes. Le véhicule tracteur comporte alors un attelage avec un crochet recevant le timon torique. Pour ne pas risquer de rompre la liaison entre le véhicule tracteur et l'ensemble tracté, il est connu de munir l'attelage d'un dispositif de verrouillage empêchant le timon torique de sortir du crochet.

Il existe des systèmes par exemple présentant le plus souvent un levier, parfois un autre élément, qui vient empêcher dans une position, dite position fermée, la sortie du timon torique du dispositif d'attelage. Ce levier, ou autre, est verrouillé par un premier système de verrouillage dans sa position fermée. Conformément à la réglementation, un second système de verrouillage est généralement présent et ce dernier peut consister par exemple en une goupille. Avec un tel système, il convient de manipuler tout d'abord le levier puis ensuite mettre la goupille en place.

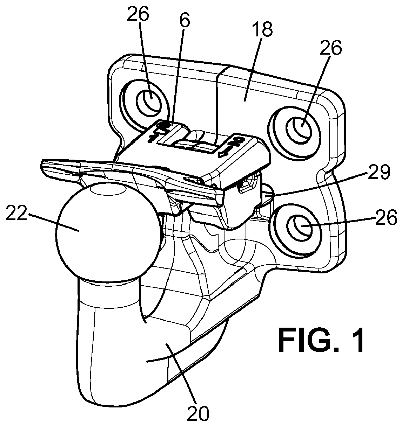

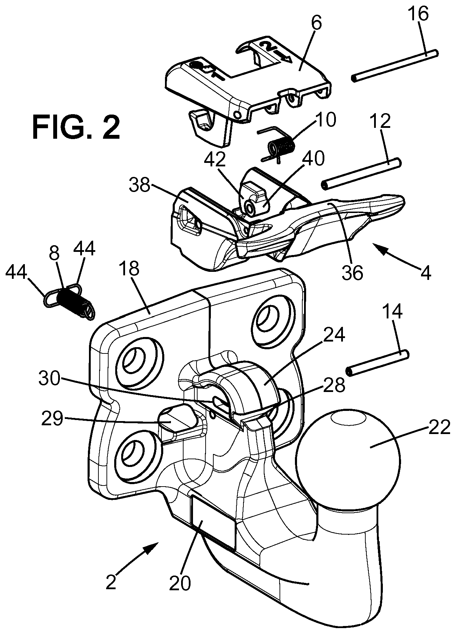

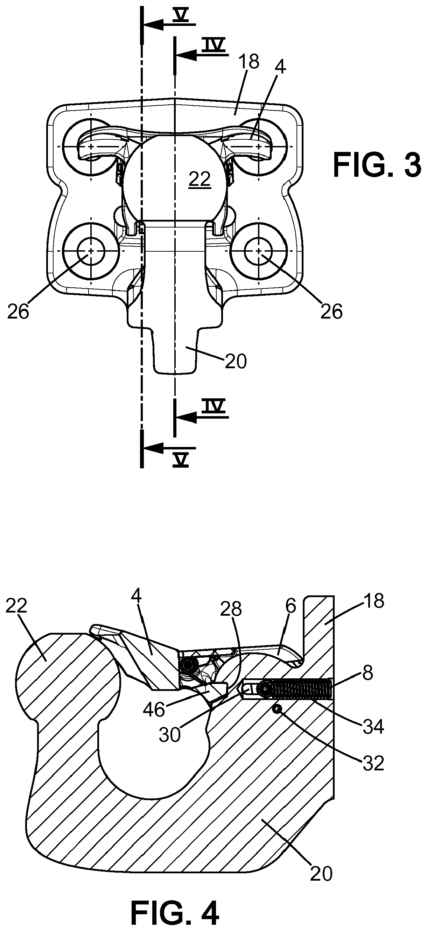

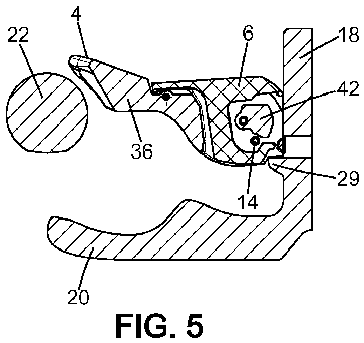

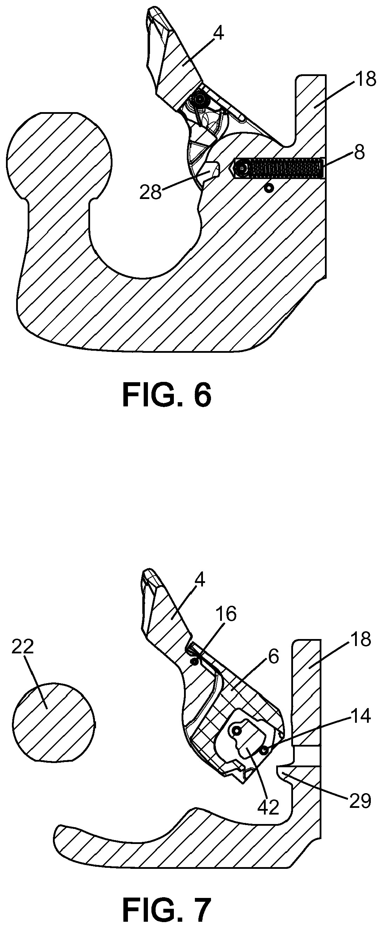

Le document EP 2 248 689 montre un dispositif d'attelage à boule et propose un dispositif de sécurité pour un tel dispositif d'attelage. Le dispositif d'attelage comporte une boule normalisée et est destinée à coopérer avec un timon présentant un logement pour recevoir la boule du dispositif d'attelage et se verrouiller sur celle-ci. Ce document de l'art antérieur propose de monter sur un col portant la boule du dispositif d'attelage un dispositif de sécurité complémentaire permettant d'empêcher un retrait involontaire du timon. Ce dispositif permet en outre de protéger la boule du dispositif d'attelage lorsqu'elle n'est pas utilisée. La figure 5 de ce document illustre une position du dispositif de sécurité avant accouplement avec un timon, la figure 6 illustre le dispositif de sécurité lorsqu'il est en fonction (timon accouplé) et la figure 7 montre le dispositif dans une position dans laquelle il protège la boule du dispositif d'attelage. Le dispositif de sécurité décrit dans ce document comporte essentiellement trois pièces articulées entre elles : un support (fig. 1 et 2), un capot (fig. 3) et un levier (fig. 4). Le capot est monté pivotant sur le support autour d'un premier axe et le levier est monté pivotant autour d'un second axe sur le capot. Des ressorts sont utilisés au niveau de ces deux axes pour précontraindre les pièces correspondantes dans une position donnée.

Le document EP 1 849 632 révèle un système de verrouillage d'une boule dans un système d'attelage trois points d'un tracteur agricole. Ici, il est décrit un système de verrouillage permettant de maintenir un organe mâle lorsqu'il est introduit dans un logement.

La présente invention a pour but de fournir un attelage avec un crochet pour recevoir un timon avec un anneau présentant un système de verrouillage pour lequel un verrouillage est réalisé automatiquement lorsque l'on vient fermer l'accès au crochet pour empêcher le timon de sortir.

Un autre but de la présente invention est de fournir un dispositif d'attelage ergonomique. De préférence, ce dispositif sera fiable et son prix de revient sera de préférence limité.

À cet effet, la présente invention propose un dispositif d'attelage présentant un corps avec un crochet solidaire dudit corps et un levier pivotant autour d'un axe de pivotement entre une position rabattue interdisant à un anneau de s'engager sur le crochet et une position relevée autorisant un tel engagement.

Selon la présente invention, le levier et le corps sont munis de moyens de guidage ; lesdits moyens de guidage sont conformés de telle sorte que, dans sa position rabattue, le levier est mobile en translation selon une direction sensiblement perpendiculaire à l'axe de pivotement, entre une position dans laquelle un pivotement vers la position relevée est possible et une autre position dans laquelle un tel pivotement est empêché par au moins une butée, et des moyens de rappel sont prévus pour précontraindre le levier dans sa position translatée rabattue dans laquelle un pivotement vers la position relevée est empêchée.

Grâce à cette structure, lorsque le levier passe dans la position rabattue, sous l'action des moyens de rappel, un verrouillage est automatiquement réalisé. Cette structure présente en outre l'avantage d'être simple.

Pour animer le levier d'un mouvement de translation et d'un mouvement de rotation, on peut par exemple prévoir que le levier est monté autour d'un axe mobile en translation. Des moyens de guidage en translation sont prévus alors pour guider l'axe mobile

Dans un dispositif d'attelage selon l'invention, les moyens de guidage peuvent comporter un axe fixe parallèle à l'axe de pivotement et au moins une came sur le levier, ladite came étant maintenue en appui sur l'axe par les moyens de rappel. Cette forme de réalisation est particulièrement avantageuse puisqu'un même moyen de rappel est utilisé à la fois pour réaliser un verrouillage automatique et pour assurer le guidage lors du mouvement relatif entre deux pièces.

Dans un dispositif d'attelage tel que décrit ci-dessus, les moyens de guidage sont conformés avantageusement de telle sorte que la position relevée est une position stable.

Pour encore plus de sécurité, un dispositif d'attelage selon l'invention peut comporter en outre des moyens de verrouillage du levier dans sa position rabattue. Ces moyens de verrouillage comportent par exemple une butée mobile empêchant une translation du levier lorsqu'il est en position rabattue. À titre d'exemple, ces moyens de verrouillage peuvent se présenter sous la forme d'un bouton poussoir monté pivotant sur le levier, ledit bouton poussoir étant muni d'au moins un crochet. Dans ce dernier cas de figure, et lorsque les moyens de guidage du levier comportent une came coopérant avec un axe fixe, alors chaque crochet du bouton poussoir peut être adapté pour coopérer avec l'axe fixe servant d'appui à la came.

Les moyens de verrouillage complémentaires évoqués au paragraphe précédent peuvent être avantageusement précontraints par au moins un ressort dans leur position verrouillée.

Le dispositif d'attelage dont il est question ici est de préférence tel que l'extrémité libre du crochet d'attelage se présente sous la forme d'une boule d'attelage normalisée de telle sorte que le dispositif d'attelage puisse servir pour deux types distincts de timons de véhicule tracté.

La présente invention concerne plus particulièrement un dispositif d'attelage dans lequel le corps comporte une plaque de fixation et le crochet présente une partie proximale s'étendant à partir de la plaque de fixation perpendiculairement à celle-ci ainsi qu'une partie distale raccordée à la plaque de fixation par la partie proximale, ladite partie distale s'étendant sensiblement parallèlement à la plaque de fixation.

Dans cette forme de réalisation, on peut prévoir qu'en position rabattue, le linguet s'étend sensiblement parallèlement à la partie proximale du crochet et à distance de celle-ci de manière à laisser un espace d'au moins 20 mm entre eux, le linguet, le crochet et la plaque de fixation délimitant un espace destiné à recevoir un anneau de timon de remorque. Dans cette forme de réalisation, on peut aussi prévoir en option que le linguet soit monté pivotant autour d'un axe sensiblement parallèle à la plaque de fixation et porté par un support ne formant qu'une seule pièce avec ladite plaque.

Des détails et avantages de la présente invention apparaitront mieux de la description qui suit, faite en référence au dessin schématique annexé sur lequel :
La figure 1 est une vue en perspective d'une forme de réalisation préférée d'un dispositif d'attelage selon l'invention,
La figure 2 est une vue en perspective éclatée (vue sous un autre angle) du dispositif d'attelage de la figure 1,
La figure 3 est une vue de face du dispositif d'attelage des figures 1 et 2,
La figure 4 est une vue selon la ligne de coupe IV-IV de la figure 3,
La figure 5 est une vue selon la ligne de coupe V-V de la figure 3,
La figure 6 est une vue similaire à celle de la figure 4, le dispositif étant dans une position intermédiaire,
La figure 7 est une vue similaire à celle de la figure 5, le dispositif étant dans une position intermédiaire,
La figure 8 est une vue similaire à celle de la figure 4, le dispositif étant dans une position relevée, et
La figure 9 est une vue similaire à celle de la figure 5, le dispositif étant dans une position relevée.

Le dispositif d'attelage représenté au dessin est une forme préférée d'un dispositif d'attelage selon la présente invention et présente de nombreuses caractéristiques optionnelles. Ainsi par exemple, tel que représenté, il apparait immédiatement à l'homme du métier que le dispositif d'attelage représenté est adapté pour recevoir, d'une part, un timon avec un embout torique et, d'autre part, un timon muni d'une tête d'attelage destinée à coopérer avec une boule mais la présente invention pourrait concerner un attelage sans boule.

La figure 2 montre toutes les pièces constitutives du dispositif d'attelage de la figure 1. On voit sur cette figure 2 un corps 2, un levier appelé par la suite linguet 4 car il est précontraint élastiquement, une pièce destinée au verrouillage du linguet 4 et appelée dans la suite de la description bouton 6, un premier ressort 8, un second ressort 10, une première goupille 12, une deuxième goupille 14 et une troisième goupille 16.

Le corps 2 est une pièce massive, métallique, par exemple en acier, qui présente trois parties : une plaque de fixation 18, un crochet 20 se terminant par une boule 22 et un support 24 pour le linguet 4.

La plaque de fixation 18 présente une face d'appui plane qui est destinée à venir se positionner contre une barre transversale d'un véhicule. Quatre alésages 26 sont prévus pour permettre de réaliser une fixation rigide du corps 2 sur une telle barre transversal (ou tout autre support prévu à cet effet sur un véhicule tracteur).

Le crochet 20 s'étend à partir de la plaque de fixation 18 perpendiculairement à celle-ci et en étant centré par rapport à la plaque de fixation 18. On considérera par la suite que ce corps 2, et plus généralement le dispositif d'attelage est fixé sur un véhicule. On obtient ainsi naturellement une orientation verticale, horizontale et un sens haut/bas. En effet, la plaque de fixation 18 est disposée verticalement, le crochet 20 s'étend tout d'abord horizontalement à partir de la plaque de fixation 18 tandis que son extrémité, formée ici par la boule 22 est orientée vers le haut. La boule 22 est une boule normalisée pour un attelage. En outre, la forme du crochet 20 et ses dimensions sont telles qu'un anneau torique (non représenté) d'un timon puisse passer sur la boule 22 et reposer sur la partie sensiblement horizontale du crochet 20. En position rabattue, le linguet 4 vient alors fermer l'espace délimité par la plaque de fixation 18 et le crochet 20 pour empêcher l'anneau torique d'en sortir. La distance entre d'une part la plaque et l'extrémité du crochet 20 portant la boule 22 et d'autre part le linguet en position rabattue et la partie proximale du crochet qui s'étend perpendiculairement à la plaque est à chaque fois supérieure à au moins 15 mm, de préférence supérieure à 20 mm pour pouvoir recevoir avec jeu un anneau de timon de remorque.

Le support 24 est disposé ici au-dessus de la base du crochet 20, contre la plaque de fixation 18. Il présente face à la boule 22 une encoche 28 qui s'étend transversalement à l'horizontale. Il comporte en outre un trou oblong 30 s'étendant transversalement et à l'horizontale ainsi qu'un trou circulaire 32 disposé en dessous du trou oblong 30 et plus près de la plaque de fixation 18 que ce trou oblong 30. Le trou oblong 30 et le trou circulaire 32 sont des trous traversant de part en part le support 24.

De part et d'autre du support 24, on remarque la présence à chaque fois d'une saillie qui forme un appui 29 destiné à coopérer avec le linguet 4 comme il sera décrit ultérieurement.

Enfin, le corps 2 présente un alésage 34 qui s'étend à l'horizontale à travers la plaque de fixation de telle manière à venir intersecter le trou oblong 30. Cet alésage 34 est borgne. On peut le voir au mieux sur les figures en coupe (figures 4, 6 et 8).

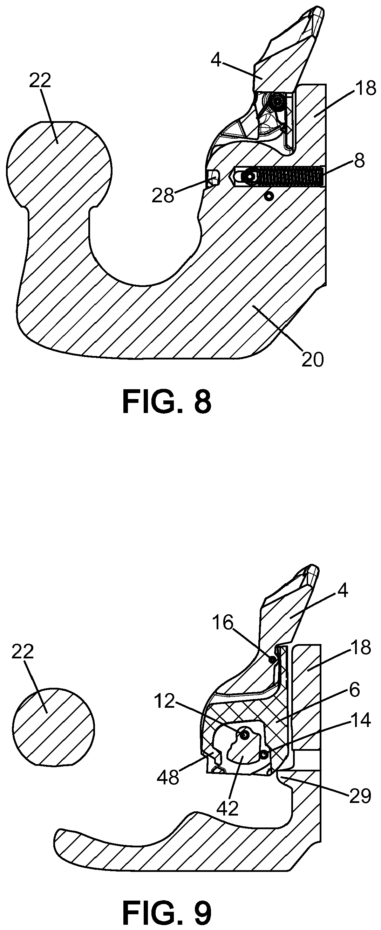

Le linguet 4 est monté sur le support 24. Il a pour fonction d'empêcher un anneau torique d'un timon attelé au crochet 20 de repasser accidentellement au-dessus de la boule 22. Pour remplir cette fonction, le linguet 4 est mobile entre une position, dite position relevée, dans laquelle un anneau torique de timon peut librement venir s'atteler sur le crochet 20 (ou se désatteler) et une position, dite position rabattue, dans laquelle le linguet fait obstacle à la mise en place ou au retrait d'un anneau torique de timon. Les figures 8 et 9 illustrent la position relevée du linguet 4, les figures 1, 3, 4 et 5 sa position rabattue dans laquelle le linguet s'étend depuis la plaque de fixation 18 jusqu'à la boule 22 avec éventuellement un jeu de l'ordre du centimètre (par exemple inférieur à 1,5 cm).

Le linguet 4 présente, d'une part, un bras 36 formant un verrou entre le support 24 et la boule 22 et, d'autre part, un étrier de guidage portant le bras 36 et participant à la liaison et au guidage du bras 36 sur le support 24.

Le bras 36 peut prendre un grand nombre de formes. La forme représentée est purement illustrative. Elle permet de bien adapter l'extrémité du bras 36 à la boule 22 et des doigts latéraux sont prévus pour faciliter la préhension du linguet 4 par un utilisateur.

L'étrier de guidage présente deux branches 38 qui sont symétriques l'une par rapport à l'autre. Chaque branche 38 se trouve dans un plan longitudinal (par rapport au véhicule portant l'attelage) et forme une joue latérale pour le support 24.

Chaque branche 38 présente un palier 40 destiné à recevoir la première goupille 12, cette dernière étant montée dans le trou oblong 30 du support 24. Ainsi, le linguet 4 peut se déplacer en translation par rapport au support 24 (coulissement de la première goupille 12 dans le trou oblong 30) et en rotation autour de la première goupille 12. Pour guider le linguet 4 et privilégier soit un mouvement de rotation, soit un mouvement de translation, les branches 38 comportent chacune sur leur face intérieure, c'est-à-dire la face tournée vers le support 24, une came 42 qui coopère avec la deuxième goupille 14. Comme on le verra plus loin, la came 42 est conformée pour privilégier le mouvement de rotation autour de la première goupille 12 lorsque le linguet passe de la position relevée à la position rabattue (ou inversement) et pour autoriser un mouvement de translation du linguet 4 dans sa position rabattue. Pour maintenir la came 42 en appui sur la deuxième goupille 14, le premier ressort 8 vient précontraindre le linguet 4. Comme visible notamment sur les vues en coupe des figures 4, 6 et 8, le premier ressort 8 est logé dans l'alésage 34. Par contre, contrairement à ce qui est représenté sur ces figures où le ressort est illustré en position de repos, une extrémité du premier ressort 8 est en prise avec la première goupille 12. À l'autre extrémité du premier ressort 8, deux ailes transversales 44 retiennent le premier ressort 8 contre la plaque de fixation 18. Lorsque l'attelage est monté sur un véhicule, ces ailes transversales 44 sont ainsi prises en sandwich entre la plaque de fixation 18 dans laquelle il est de préférence prévu un logement de taille adaptée aux ailes transversales 44 et la barre d'attelage du véhicule.

Le linguet 4 présente également un verrou 46 transversal qui relie les deux branches 38 et se trouve du côté du bras 36 du linguet 4. Ce verrou 46 est destiné à coopérer en position rabattue avec l'encoche 28 évoquée plus haut comme il sera expliqué plus loin.

Dans la forme de réalisation illustrée, le dispositif d'attelage comporte également le bouton 6 qui forme un moyen de verrouillage de sécurité complémentaire optionnel.

Le bouton 6 se présente sous la forme d'un capot venant recouvrir l'étrier de guidage du linguet 4 duquel font saillie vers le bas deux crochets de verrouillage 48. Le bouton 6 est monté pivotant sur le linguet 4 autour de la troisième goupille 16 qui est disposée transversalement à l'horizontale, parallèlement à la première goupille 12 et à la deuxième goupille 14. Les crochets de verrouillage 48 sont destinés à coopérer avec la deuxième goupille 14 comme il sera expliqué plus loin. Le second ressort 10 est prévu pour précontraindre le bouton 6 dans sa position verrouillée.

Le fonctionnement de ce dispositif d'attelage est maintenant décrit en référence aux figures 4 à 9.

Sur les figures 1, 3, 4 et 5, le dispositif d'attelage est en position fermée et verrouillée. La figure 4 est une vue en coupe dans un plan médian et la figure 5 est une vue en coupe dans un plan parallèle au plan décalé montrant notamment une came 42 et la deuxième goupille 30.

Dans cette position verrouillée, on remarque tout d'abord (figure 4) que le verrou 46 transversal est positionné dans l'encoche 28. Le premier ressort 8 exerce une force sur le linguet 4 qui tend à maintenir le verrou 46 transversal dans l'encoche 28. En outre, on remarque (figure 5) que les extrémités libres des branches 38 viennent reposer sur les appuis 29 qui sont fixes puisque solidaires de la plaque de fixation 18 du corps 2. Ainsi, tant que le verrou 46 est dans cette encoche 28 et que les branches 38 sont en appui sur les appuis 29, une rotation du linguet 4 autour de la première goupille 12 n'est pas possible. Le linguet 4 est donc verrouillé dans sa position rabattue pour cette première raison.

Pour déverrouiller le linguet 4, il convient de faire sortir le verrou 46 transversal hors de l'encoche 28 et dégager les branches 38 des appuis 29. Pour réaliser cette opération, il convient de tirer le linguet 4 en direction de la boule 22. Ce mouvement est possible en faisant coulisser la première goupille 12 dans le trou oblong 30 qui participe ainsi au guidage en translation de cette goupille et du linguet 4 tout en formant un palier pour l'axe de rotation (goupille 12) du linguet 4. Cependant, dans la position illustrée sur les figures 4 et 5, ce mouvement de translation est empêché par le bouton 6. En effet, on remarque sur la figure 5 que les crochets de verrouillage 48 du bouton 6 sont en prise avec la deuxième goupille 14 qui est fixe par rapport au support 24 et donc par rapport au corps 2. Ainsi, pour permettre le mouvement de déverrouillage de translation du verrou 46, il convient de libérer les crochets de verrouillage 48. Pour ce faire, il convient de faire pivoter le bouton 6 autour de la troisième goupille 16 de manière à déplacer les crochets de verrouillage 48 vers le bas.

En résumé, à partir de la position illustrée sur les figures 4 et 5 notamment, il convient tout d'abord de faire pivoter le bouton 6 autour de la troisième goupille 16, à l'encontre de la force de rappel du second ressort 10, puis de tirer le linguet 4 vers la boule 22 à l'encontre de la force de rappel du premier ressort 8 pour que le verrou 46 transversal sorte de l'encoche 28.

Le mouvement de rotation du linguet 4 vers sa position relevée peut alors commencer. Les figures 6 et 7 montrent le linguet 4 dans une position intermédiaire. La came 42 est ici en appui sur la deuxième goupille 14 grâce à la précontrainte du premier ressort 8. Pendant cette rotation de la position rabattue à la position relevée, la deuxième goupille 14 glisse sur un segment de la came 42 centré sur l'axe de rotation, c'est-à-dire la première goupille 12, et qui présente un rayon de courbure constant. On remarque que ce segment présentant une section en arc de cercle est placé entre deux segments sensiblement plans. On remarque sur les figures 4 et 5 que l'un des segments plans correspond au déplacement en translation du linguet 4 lorsqu'il est dans sa position rabattue, c'est-à-dire du déplacement de la première goupille 12 dans le trou oblong 30.

Lorsque le linguet 4 arrive en position relevée, la deuxième goupille 12 aborde alors le second segment plan de chaque came 42. Cette position est illustrée sur les figures 8 et 9. Le linguet 4 et son bouton 6 viennent ici en appui contre la plaque de fixation 18. Cette position est une position stable grâce à la forme donnée ici à la came 42 et plus particulièrement au second segment plan. Pour passer du segment circulaire au segment plan, il y a un passage par un point dur qui permet de rendre la position relevée stable. Le linguet 4 reste donc "naturellement" dans sa position relevée et n'a pas tendance à retomber tout seul en position rabattue. Ainsi, la manoeuvre d'attelage avec un timon avec anneau torique ou en utilisant la boule 22 ne risque pas d'être perturbée par une chute intempestive du linguet 4 en direction de la boule 22.

Pour passer de la position relevée à la position rabattue, il suffit d'agir sur le linguet 4 pour le déplacer en direction de la boule 22. Comme indiqué plus haut, il convient de passer un point dur jusqu'à ce que la deuxième goupille 14 soit face au segment circulaire de chaque came 42. Il convient alors d'accompagner le mouvement du linguet 4 vers la position rabattue. Une fois que la position rabattue est atteinte, le premier ressort 8 induit le mouvement de translation du linguet 4 pour introduire le verrou 46 transversal dans l'encoche 28. Lors de ce mouvement, les crochets de verrouillage 48 viennent crocheter la deuxième goupille 14. La forme des crochets de verrouillage 48 est bien entendu prévue pour favoriser cet encliquetage automatiquement.

Le dispositif d'attelage proposé est un dispositif ergonomique. Sa manipulation est facile. Le déverrouillage peut se réaliser simplement d'une seule main, bien que présentant une double sécurité. Le verrouillage quant à lui est automatique.

Ce dispositif présente l'avantage d'être simple et d'un prix de revient limité. En effet, le nombre de pièces mises en oeuvre est limité. Il peut être encore plus limité s'il est mis en oeuvre sans le bouton qui permet de réaliser un deuxième niveau de sécurité qui est optionnel.

Bien entendu, la présente invention ne se limite pas à la forme de réalisation préférée décrite ci-dessus à titre d'exemple non limitatif et aux variantes évoquées mais elle s'étend aux formes de réalisation à la portée de l'homme du métier dans le cadre des revendications ci-après.

## Revendications

1. Dispositif d'attelage présentant un corps (2) avec un crochet (20) solidaire dudit corps et un levier (4) pivotant autour d'un axe de pivotement (12) entre une position rabattue interdisant à un anneau de s'engager sur le crochet (20) et une position relevée autorisant un tel engagement,
**caractérisé en ce que** le levier (4) et le corps (2) sont munis de moyens de guidage (14, 30, 42),
**en ce que** les moyens de guidage sont conformés de telle sorte que, dans sa position rabattue, le levier (4) est mobile en translation selon une direction sensiblement perpendiculaire à l'axe de pivotement (12), entre une position dans laquelle un pivotement vers la position relevée est possible et une autre position dans laquelle un tel pivotement est empêché par au moins une butée (28), et
**en ce que** des moyens de rappel (8) sont prévus pour précontraindre le levier (4) dans sa position translatée rabattue dans laquelle un pivotement vers la position relevée est empêchée.

2. Dispositif d'attelage selon la revendication 1, **caractérisé en ce que** le levier (4) est monté autour d'un axe (12) mobile en translation.

3. Dispositif d'attelage selon l'une des revendications 1 ou 2, **caractérisé en ce que** les moyens de guidage comportent un axe fixe (14) parallèle à l'axe (12) de pivotement et au moins une came (42) sur le levier (4), ladite came (42) étant maintenue en appui sur l'axe (14) par les moyens de rappel (8).

4. Dispositif d'attelage selon l'une des revendications 1 à 3, **caractérisé en ce que** les moyens de guidage sont conformés de telle sorte que la position relevée est une position stable.

5. Dispositif d'attelage selon l'une des revendications 1 à 4, **caractérisé en ce qu'**il comporte en outre des moyens de verrouillage (6) du levier (4) dans sa position rabattue.

6. Dispositif d'attelage selon la revendication 5, **caractérisé en ce que** les moyens de verrouillage comportent une butée mobile (48) empêchant une translation du levier (4) lorsqu'il est en position rabattue.

7. Dispositif d'attelage selon l'une des revendications 5 ou 6, **caractérisé en ce que** les moyens de verrouillage se présentent sous la forme d'un bouton (6) poussoir monté pivotant sur le levier (4), ledit bouton (6) poussoir étant muni d'au moins un crochet (48).

8. Dispositif d'attelage selon l'une des revendications 3 et 7, **caractérisé en ce que** chaque crochet (48) du bouton (6) poussoir est adapté pour coopérer avec l'axe (14) fixe servant d'appui à la came (42).

9. Dispositif d'attelage selon l'une des revendications 5 à 8, **caractérisé en ce que** les moyens de verrouillage sont précontraints par au moins un ressort (10) dans la position verrouillée.

10. Dispositif d'attelage selon l'une des revendications 1 à 9, **caractérisé en ce que** l'extrémité libre du crochet (20) d'attelage se présente sous la forme d'une boule (22) d'attelage normalisée de telle sorte que le dispositif d'attelage puisse servir pour deux types distincts de timons de véhicule tracté.

11. Dispositif d'attelage selon l'une des revendications 1 à 10, **caractérisé en ce que** le corps(2) comporte une plaque de fixation (18) et **en ce que** le crochet (20) présente une partie proximale s'étendant à partir de la plaque de fixation perpendiculairement à celle-ci ainsi qu'une partie distale raccordée à la plaque de fixation (18) par la partie proximale, ladite partie distale s'étendant sensiblement parallèlement à la plaque de fixation (18).

12. Dispositif d'attelage selon la revendication 11, **caractérisé en ce qu'**en position rabattue, le linguet (4) s'étend sensiblement parallèlement à la partie proximale du crochet (20) et à distance de celle-ci de manière à laisser un espace d'au moins 20 mm entre eux, le linguet (4), le crochet (20) et la plaque de fixation (18) délimitant un espace destiné à recevoir un anneau de timon de remorque.

13. Dispositif d'attelage selon l'une des revendications 11 ou 12, **caractérisé en ce que** le linguet (4) est monté pivotant autour d'un axe (12) sensiblement parallèle à la plaque de fixation (18) et porté par un support (24) ne formant qu'une seule pièce avec ladite plaque.
